(19) Europäisches Patentamt / European Patent Office / Office européen des brevets

(11) **EP 4 582 493 A1**

(12) **EUROPEAN PATENT APPLICATION**

(43) Date of publication:
**09.07.2025 Bulletin 2025/28**

(21) Application number: **24150493.5**

(22) Date of filing: **05.01.2024**

(51) International Patent Classification (IPC):
**C09C 1/48** *(2006.01)*   **C09C 1/50** *(2006.01)*
**C09C 1/56** *(2006.01)*

(52) Cooperative Patent Classification (CPC):
**C09C 1/56; C09C 1/482; C09C 1/50;**
C01P 2002/84; C01P 2004/61; C01P 2004/62;
C01P 2006/12; C01P 2006/19; C01P 2006/80

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Orion Engineered Carbons GmbH 65760 Eschborn (DE)**

(72) Inventors:
• **SCHINKEL, Arndt-Peter 56112 Lahnstein (DE)**

• **BOWLES, Alexander 50939 Köln (DE)**
• **WIDJAJA, Andreas 64521 Groß-Gerau (DE)**
• **STANYSCHÖFSKY, Michael 50354 Hürth (DE)**
• **DETERS, David 53173 Bonn (DE)**
• **TIMMERMANS, Eddy 50354 Hürth (DE)**

(74) Representative: **f & e patent Braunsberger Feld 29 51429 Bergisch Gladbach (DE)**

(54) **AIR CLASSIFYING OF RECOVERED CARBON BLACK**

(57)   The present invention relates to a method for the treatment of recovered carbon black by air classifying. It has surprisingly found that the ash content of the recovered carbon black can be reduced by air classifying. The treated carbon black by air classifying can be beneficially used to produce rubber articles.

600

FIG. 6

EP 4 582 493 A1

Description

## TECHNICAL FIELD

The present invention relates to a method for the treatment of recovered carbon black by air classifying. It has surprisingly found that the ash content of the recovered carbon black can be reduced by air classifying. The treated carbon black by air classifying can be beneficially used to produce rubber articles.

## TECHNICAL BACKGROUND

Carbon blacks have numerous uses such as a reinforcing agent or filler for the rubber and tire industries. Moreover, carbon black has seen increased use in other areas such as coloring agents and reprographic toners for copying machines. The various applications of carbon black necessitate a diverse range of carbon black characteristics such as particle size, structure, yield, surface area, and stain.

Recycled blacks are carbon blacks typically obtained from end-of-life products containing carbon black, such as scrap tires (waste tires), and obtained by recycling processes. Production of recycled blacks typically involves 1 to 3 processes. Firstly, a pyrolysis step is deployed to decompose organic components such as rubbers or plastics. Secondly, an optional demineralization step is deployed to dissolve inorganic additives or impurities. Thirdly, the resulting material is milled to produce a controlled particle size distribution.

Tire pyrolysis of end-of-life products containing carbon black is usually carried out at low temperatures and produces a liquid, gaseous and solid fraction. The liquid fraction can then be used to produce new or virgin carbon black in an entrained flow reactor such as a furnace reactor. US 2002/0117388 A1 relates to the pyrolysis of waste rubber materials, including scrap tires. The obtained carbon black is generally referred to as "recovered carbon black" (rCB).

rCB is a complex mixture resulting from the compounds used in pyrolysis. The compounds used in the pyrolysis process may contain various components (i.e. ash) other than carbon black, such as inorganic additives and fillers (e.g., zinc oxide, silicon oxide, sulphur compounds and calcium carbonate) and traces of steel.

However, the performance of rCB is generally poor compared to carbon black produced from e.g. a standard hydrocarbon feedstock such as oil. Accordingly, it is desired to provide a method in which the rCB is treated.

It has surprisingly found that the ash content of the recovered carbon black can be reduced by air classifying. The treated carbon black by air classifying can be beneficially used to produce rubber articles.

## SUMMARY OF THE INVENTION

The present invention relates to a method for treating recovered carbon black, comprising: (A) providing recovered carbon black, (B) subjecting the recovered carbon black of step (A) to an air classifying unit (602), (B) obtaining treated carbon black after the classifying of step (B).

Furthermore, treated carbon black obtained according to the inventive method is provided.

Moreover, the present invention is directed to the use of an air classifying unit (602) for reducing the ash content of recovered carbon black to obtain treated carbon black.

## BRIEF DESCRIPTION OF THE DRAWINGS

Figure 1 (FIG. 1): Section of a furnace reactor.
Figure 2 (FIG. 2): Feeding and mixing device comprising a nozzle.
Figure 3 (FIG. 3): Laval-nozzle for the feeding and mixing device.
Figure 4 (FIG. 4): Deagglomeration conduit for the feeding and mixing device.
Figure 5 (FIG. 5): Feeding and mixing device without a nozzle.
Figure 6 (FIG. 6): Air classifying unit.
Figure 7 (FIG. 7): Classifying wheel.
Figure 8 (FIG. 8): Ash components associated in the rCB.

## DETAILED DESCRIPTION

It must be noted that, as used in the specification and the appended claims, the singular forms "a," "an" and "the" include plural referents unless the context clearly dictates otherwise.

As used herein, the term "comprising" is understood to be open-ended and to not exclude the presence of additional undescribed or unrecited elements, materials, ingredients or method steps etc. The terms "including", "containing" and like terms are understood to be synonymous with "comprising". As used herein, the term "consisting of" is understood to exclude the presence of any unspecified element, ingredient or method step etc.

Unless indicated to the contrary, the numerical parameters and ranges set forth in the following specification and appended claims are approximations. Notwithstanding that the numerical ranges and parameters setting forth the broad scope of the invention are approximations, the numerical values set forth in the specific examples are reported as precisely as possible. Any numerical values, however, contain errors necessarily resulting from the standard deviation in their respective measurement.

Also, it should be understood that any numerical range recited herein is intended to include all subranges subsumed therein. For example, a range of "1 to 10" is intended to include any and all sub-ranges between and including the recited minimum value of 1 and the recited maximum value of 10, that is, all subranges beginning with a minimum value equal to or greater than 1 and ending with a maximum value equal to or less than 10, and all subranges in between, e.g., 1 to 6.3, or 5.5 to 10, or 2.7 to 6.1.

All parts, amounts, concentrations etc. referred to herein are by weight, unless specified otherwise. If no basis for parts, amounts, concentrations etc. are indicated, the parts, amounts, concentrations etc. are based on the respective composition/atmosphere/gas in which the respective material/parameter etc. is present.

The expression "feedstock" usually refers to the feedstock for the treatment of carbon black. According to the present invention, a recovered carbon black is used for the treatment of carbon black.

"Carbon black" as referred to herein means a material composed substantially, e.g. to more than 50 wt.%, or more than 70 wt.% or more than 80 wt.%, based on its total weight of carbon that is produced by pyrolysis or radical driven abstraction of not carbon atoms of a carbon black feedstock. Different industrial processes are known for the production of carbon blacks such as the furnace process, gas black process, acetylene black process, thermal black process or lamp black process. The production of carbon blacks is per se well known in the art and for example outlined in J.-B. Donnet et al., "Carbon Black:Science and Technology", 2nd edition, therefore being not described herein in more detail. However, it is possible that "carbon black" comprises impurities as mentioned further below.

The pyrolysis of rubber articles generally involves heating the rubber articles to temperatures, e.g., of at least 360 °C in the absence of oxygen in order to volatilize and decompose the rubber articles, producing oil, gas (pyrolysis gas), and char. The expression "pyrolyzed carbon black-containing particulate" is used for the expression "char" alternatively.

As used herein, the term "rubber articles" refers to articles composed of rubber, e.g., composed of at least 40 wt.-% of rubber, based on the total weight of the rubber article. Examples of rubber articles include, but are not limited to, tires, conveyer belts, gaskets, such as door gaskets, drive belts, floor mats, shoe soles, belts, cable sheaths, hoses, and the like. Preferred rubber articles include tires. The term "rubber" includes both natural and synthetic rubbers or mixtures thereof. Natural rubber (polyisoprene) may be obtained from rubber trees (Helvea brasiliensis), guayule, and dandelion. Synthetic rubber may comprise styrene-butadiene rubber such as emulsion-styrene-butadiene rubber and solution-styrene-butadiene rubber, polybutadiene, polyisoprene, ethylene-propylene-diene rubber, ethylene-propylene rubber, butyl rubber, halogenated butyl rubber, chlorinated polyethylene, chlorosulfonated polyethylene, acrylonitrile-butadiene rubber, hydrogenated acrylonitrile-butadiene rubber, polychloroprene, acrylate rubber, ethylene-vinylacetate rubber, ethylene-acrylic rubber, epichlorohydrin rubber, silicone rubber, fluorosilicone rubber, fluorocarbon rubber or mixture of combinations of any of the foregoing.

The expression "material" refers to the material that is treated or classified.

The present invention relates to the treatment of recovered carbon black (rCB). It should be noted that recovered carbon black (rCB) - in comparison to virgin carbon black (vCB) - comprises ash (ash components) that is typically embedded in the carbon of the rCB, attached to the carbon of the rCB, attached on the surface of the carbon of the rCB, and/or associated in the carbon of the rCB.

Ash typically comprise metal, metal compounds, silicon, oxygen, sulphur and/or silica, preferably metal comprises zinc, silicon, calcium, cobalt, manganese, potassium, aluminium, and/or iron. The ash content is typically determined according to ASTM D 1506-15 at 550 °C, 16 h.

Accordingly, the specific rCB particles and the ash components are generally not present as separate components so that a rCB mixture generally not comprise merely a distinct silica particle and a distinct carbon black particle.

Accordingly, rCB is typically derived (or recovered) from the pyrolysis of a particulate carbon-black containing feedstock, such as rubber granulate, plastic granulate, and/or biomass-based granulate, preferably rubber granulate.

Virgin carbon black is usually carbon black that is not derived (or recovered) from the pyrolysis of a particulate carbon-black containing feedstock, such as rubber granulate, plastic granulate, and/or biomass-based granulate, preferably rubber granulate. Virgin carbon black is usually obtained from a furnace process, gas black process, acetylene black process, thermal black process or lamp black process by utilizing a fuel oil feedstock, or a feedstock that does not comprise carbon black. Thus, no carbon black that is generally present in a feedstock is recovered to produce virgin carbon black.

The present invention relates to a method for treating recovered carbon black, comprising: (A) providing recovered carbon black, (B) subjecting the recovered carbon black of step (A) to an air classifying unit (602), (B) obtaining treated carbon black after the classifying of step (B).

The air classifying unit (602) can comprise a classifying wheel (700). Alternatively, the air classifying unit (602) can comprise (or can be) a cyclone unit (604).

The classifying wheel (700) can be configured so that the classifying air flows contrary to the centrifugal force through vanes (701) arranged in a ring parallel to the rotational axis (703).

The classifying wheel (700) can comprise flow channels (702) between vanes (701) that are formed by the planes of the vanes (701) that run parallel to each other in the direction of the rotational axis (703).

The classifying wheel (700) can be configured so that the classifying air flows contrary to the centrifugal force through vanes (701) arranged in a ring parallel to the rotational axis (703) that are arranged between a circular disc and an annular-shaped cover disc.

The classifying wheel (700) can be configured so that the classifying air flows contrary to the centrifugal force through vanes (701) arranged in a ring parallel to the rotational axis (703) that are arranged between a circular disc that bears the classifying wheel hub and an annular-shaped cover disc.

The classifying wheel (700) can be configured so that the classifying air flows contrary to the centrifugal force through vanes (701) arranged in a ring parallel to the rotational axis (703) that are arranged between a circular disc that bears the classifying wheel hub and an annular-shaped cover disc, whereby the flow channels (702) between the vanes (701) are formed by the planes of the vanes (701) that run parallel to each other in the direction of the rotational axis (703).

The classifying wheel (700) can be configured so that the classifying air flows contrary to the centrifugal force through vanes (701) arranged in a ring parallel to the rotational axis (703) that are arranged between a circular disc that bears the classifying wheel hub and an annular-shaped cover disc, whereby the flow channels (702) between the vanes (701) are formed by the planes of the vanes (701) that run parallel to each other in the direction of the rotational axis (703) and whereby these planes in the transition section to the circular disc and cover disc are connected with each other by means of an arch section.

The recovered carbon black passes the flow channels (702) of a rotating classifying wheel (700) and the recovered carbon black is thereby classified.

Generally, the recovered carbon black that passes the flow channels (702) of a rotating classifying wheel (700) is considered as treated carbon black. However, it is desired that the fraction of the recovered carbon black that passes the flow channels (702) of a classifying wheel (700) is separated from the classifying air flow, such as by separation means such as a cyclone unit (604).

The treated carbon black is typically obtained by separating the classifying air flow comprising the classified recovered carbon black by using a cyclone unit (604). Preferably the treated carbon black is obtained at the bottom outline of the cyclone unit (604).

Generally, in a cyclone unit (604), the classified recovered carbon black is subjected and the fraction having a higher particle size is separated at the bottom. A smaller particle size fraction is obtained at the top of the cyclone unit (604).

Accordingly, a cyclone unit (604) separates the particle containing classifying air flow by weight or by the particle size.

It is desired that the obtained treated carbon black is the material after the classifying of step (B) and after the separation in a cyclone unit (604), preferably the material obtained at the bottom of a cyclone unit (604).

The rotational speed of the classifying wheel (700) can be 2200 to 30000 rpm, preferably 10000 to 25000 rpm, more preferably 14000 to 23000 rpm, and most preferably 18000 to 23000 rpm.

The rotational speed of the classifying wheel (700) can be selected so that the centrifugal acceleration is 1850 to 185000 m/s², preferably 5000 to 150000 m/s², more preferably 10000 to 130000 m/s², even more preferably 20000 to 100000 m/s², and most preferably 30000 to 100000 m/s², wherein the centrifugal acceleration using formula (I) and formula (II):

$$\omega = 2\pi * n \qquad\qquad (I),$$

$$\omega^2 r = a_c \qquad\qquad (II),$$

wherein n is the rotational speed of the classifying wheel (700) in rounds per second, r is the distance between the rotational axis and the vanes of the classifying wheel (700) (inner radius) in m, $a_c$ is the centrifugal acceleration in m/s², $\omega$ is the angular velocity in rad/s.

The classifying unit (602) can comprise a classifying wheel (700) and the classifying wheel (700) is subjected with a classifying air flow so that the classifying air flow velocity that passes the flow channels (702) can be 2 to 20 m/s, preferably 3 to 15 m/s, more preferably 4 to 13 m/s, and most preferably 5 to 10 m/s.

The classifying unit (602) can comprise a classifying wheel (700) and the classifying wheel (700) is subjected with a classifying air flow, preferably the classifying air flow is 10 to 100 m³/h, preferably 20 to 80 m³/h, more preferably 30 to 70 m³/h, and most preferably 40 to 60 m³/h.

Further the use of an air classifying unit (602) for reducing the ash content of recovered carbon black to obtain treated carbon black is provided.

The recovered carbon black can be derived from the pyrolysis of rubber granulate, plastic granulate, and/or biomass-based granulate, preferably rubber granulate.

The method can further comprise the pyrolysis of particulate carbon black-containing feedstock before the gasification, wherein pyrolysis of particulate carbon black-containing feedstock comprises the pyrolysis of particulate carbon black-containing feedstock at a temperature of 450 °C to 710 °C and in the absence of oxygen, wherein a pyrolysis gas stream and a recovered carbon black are obtained.

The recovered carbon black can be derived from the pyrolysis of rubber granulate, plastic granulate, and/or biomass-based granulate, preferably rubber granulate. The recovered carbon black can be derived from the pyrolysis of a tire, preferably a pneumatic tire, a tire tread, a tire belt, a tire belt reinforcement, a tire carcass, a tire carcass reinforcement, a tire sidewall, tire inner liner, tire apex, tire shoulder, tire hump strip, tire chafer, a tire bead filler. The recovered carbon black can be derived from the pyrolysis of a cable sheath, a tube, a drive belt, a conveyor belt, a roll covering, a shoe sole, a hose, a sealing member, a profile, a damping element, a coating or a colored or printed article.

The recovered carbon black according to step (A) can be milled before subjecting to an aqueous flotation slurry. For instance, mechanical (impact) milling, jet milling, ultrasonic milling and/or electrical arc milling, preferably ultrasonic milling.

The particle size is not specifically limited and non-milled rCB can be utilized.

It is desired that at least 30 wt.-%, preferably at least 40 wt.-%, more preferably at least 50 wt.-%, most preferably at least 60 wt.-%, of the recovered carbon black has a particle size of more than 2 mm, wherein the particle size is measured according to ASTM D 1511-12 (2017).

It is desired that at least 50 wt.-%, preferably at least 60 wt.-%, more preferably at least 70 wt.-%, most preferably at least 80 wt.-%, of the recovered carbon black has a particle size of more than 1 to 2 mm, wherein the particle size is measured according to ASTM D 1511-12 (2017).

It is desired that at least 50 wt.-%, preferably at least 60 wt.-%, more preferably at least 70 wt.-%, most preferably at least 80 wt.-%, of the recovered carbon black, preferably before milling, has a particle size of more than 2 to 2.8 mm, wherein the particle size is measured according to ASTM D 1511-12 (2017) using an additional U.S. Standard Sieves or equivalent, conforming to Specification ASTM E11, Sieve No. 7, having openings of 2800 µm. The sieves shall be 25 mm in height and 200 mm in diameter.

In the ASTM D 1511-12 (2017) norm, several sieves are used for the determination of the particle sizes. For instance, the expression "more than 2 to 2.8 mm" means that the mass of the particles present on Sieve No. 10 is in the desired wt.-% range. In other words, Sieve No. 10 has openings of 2000 µm (i.e. 2 mm) so that particles having a particle size of 2000 µm or less are not present on the sieve. Since Sieve No. 7 retains all particles having a particle size of more than 2.8 mm, the weight percentage of the particle fraction having a particle size of more than 2 to 2.8 mm can be easily determined.

The expression "x50" or "x(number)" means a percentile of an average distribution (alternatively the expression "D50" or "D(number) can be used). Accordingly, x50 = 100 µm means that 50% of the sample is smaller than the indicated value 100 µm.

The (i) volume average particle size x50 of the recovered carbon black can be from 50 to 800 µm preferably 80 to 500 µm, more preferably 100 to 400 µm, and most preferably 130 to 250 µm, wherein the volume average particle size is preferably measured as described in the specification by dry measurement using laser diffraction, and/or (ii) the volume average particle size x90 of the recovered carbon black can be from 50 to 400 µm preferably 80 to 350 µm, more preferably 110 to 300 µm, and most preferably 140 to 240 µm, wherein the volume average particle size is preferably measured as described in the specification by dry measurement using laser diffraction, and/or (iii) the volume average particle size x95 of the recovered carbon black can be from 80 to 300 µm preferably 100 to 350 µm, more preferably 120 to 300 µm, and most preferably 180 to 250 µm, wherein the volume average particle size is preferably measured as described in the specification by dry measurement using laser diffraction, and/or (iv) the volume average particle size x99 of the recovered carbon black can be from 100 to 250 µm preferably 130 to 240 µm, more preferably 160 to 230 µm, and most preferably 180 to 220 µm, wherein the volume average particle size is preferably measured as described in the specification by dry measurement using laser diffraction.

The (i) volume average particle size x50 of the recovered carbon black can be from 40 to 400 µm preferably 50 to 300 µm, more preferably 60 to 200 µm, and most preferably 80 to 200 µm, wherein the volume average particle size is preferably measured as described in the specification by dry measurement using laser diffraction, and/or (ii) the volume average particle size x90 of the recovered carbon black can be from 40 to 300 µm preferably 80 to 250 µm, more preferably 120 to 200 µm, and most preferably 150 to 190 µm, wherein the volume average particle size is preferably measured as described in the specification by dry measurement using laser diffraction, and/or (iii) the volume average particle size x95 of the recovered carbon black can be from 70 to 250 $\mu$m preferably 80 to 200 $\mu$m, more preferably 90 to 190 $\mu$m, and most preferably 90 to 180 $\mu$m, wherein the volume average particle size is preferably measured as described in the specification by dry measurement using laser diffraction, and/or (iv) the volume average particle size x99 of the recovered carbon black can be from 70 to 250 $\mu$m preferably 80 to 200 $\mu$m, more preferably 90 to 190 $\mu$m, and most preferably 90 to 180 $\mu$m, wherein the volume average particle size is preferably measured as described in the specification by dry measurement using laser diffraction.

The (i) volume average particle size x50 of the recovered carbon black can be from 10 to 200 $\mu$m preferably 20 to 120 $\mu$m, more preferably 30 to 100 $\mu$m, and most preferably 40 to 80 $\mu$m, wherein the volume average particle size is preferably measured as described in the specification by dry measurement using laser diffraction, and/or (ii) the volume average particle size x90 of the recovered carbon black can be from 10 to 200 $\mu$m preferably 20 to 120 $\mu$m, more preferably 30 to 100 $\mu$m, and most preferably 40 to 80 $\mu$m, wherein the volume average particle size is preferably measured as described in the specification by dry measurement using laser diffraction, and/or (iii) the volume average particle size x95 of the recovered carbon black can be from 10 to 200 $\mu$m preferably 20 to 120 $\mu$m, more preferably 30 to 100 $\mu$m, and most preferably 40 to 80 $\mu$m, wherein the volume average particle size is preferably measured as described in the specification by dry measurement using laser diffraction, and/or (iv) the volume average particle size x99 of the recovered carbon black can be from 10 to 200 $\mu$m preferably 20 to 120 $\mu$m, more preferably 30 to 100 $\mu$m, and most preferably 50 to 70 $\mu$m, wherein the volume average particle size is preferably measured as described in the specification by dry measurement using laser diffraction.

The (i) volume average particle size x50 of the recovered carbon black can be from 0.1 to 50 $\mu$m preferably 1 to 40 $\mu$m, more preferably 2 to 30 $\mu$m, and most preferably 3 to 20 $\mu$m, wherein the volume average particle size is preferably measured as described in the specification by dry measurement using laser diffraction, and/or (ii) the volume average particle size x90 of the recovered carbon black can be from 0.1 to 50 $\mu$m preferably 1 to 40 $\mu$m, more preferably 2 to 30 $\mu$m, and most preferably 3 to 20 $\mu$m, wherein the volume average particle size is preferably measured as described in the specification by dry measurement using laser diffraction, and/or (iii) the volume average particle size x95 of the recovered carbon black can be from 0.1 to 50 $\mu$m preferably 1 to 40 $\mu$m, more preferably 2 to 30 $\mu$m, and most preferably 3 to 20 $\mu$m, wherein the volume average particle size is preferably measured as described in the specification by dry measurement using laser diffraction, and/or (iv) the volume average particle size x99 of the recovered carbon black can be from 0.1 to 50 $\mu$m preferably 1 to 40 $\mu$m, more preferably 2 to 30 $\mu$m, and most preferably 3 to 20 $\mu$m, wherein the volume average particle size is preferably measured as described in the specification by dry measurement using laser diffraction.

The particle size distribution can be determined by dry measurement with the measurement system from Sympatec GmbH (Germany) consisting of VIBRI: conveyor unit (by vibration); RODOS: compressed air dispersion; and HELOS BR: measuring unit, laser diffraction. As sample preparation, 0.5 g of the dried material is filled into the funnel. During the measurement, the sample is fed with the VIBRI unit to the compressed air dispersion unit RODOS by vibration. Measurement is accomplished in HELOS BR unit using laser diffraction. OPTICAL concentration ($c_{opt}$) was automatically filtered between 5-15% during the measurement. Three separate measurements of 10 sec using each 0.5 g of the material are recorded. Before each measurement, a background measurement of 15 seconds is recorded to minimize noise. The obscuration range is controlled by the feeding rate with automatic adjustment and the hopper gap in the range of 5-15% using an integral factor of 0.2. The dispersing air pressure is set to 3 bar. Reported values (volume distribution) represent the average of three measurements after the data analysis using a standard analysis model in the instrument software.

The recovered carbon black can comprise 1 to 50 wt.-% coke, preferably 5 to 40 wt.-% coke, more preferably 6 to 35 wt.-% coke, and most preferably 10 to 30 wt.-% coke, based on the total weight of the recovered carbon black.

The recovered carbon black can have a BET surface area determined according to ASTM D6556-17 in a range from 15 to 500 m$^2$/g, preferably from 30 to 300 m$^2$/g, more preferably from 40 to 250 m$^2$/g, even more preferably from 50 to 200 m$^2$/g, most preferably from 60 to 150 m$^2$/g.

The recovered carbon black can have a compressed oil absorption number (COAN) measured according to ASTM D3493-16 in a range from 30 to 200 mL/100 g, preferably from 40 to 150 mL/100 g, more preferably from 50 to 120 mL/100 g, even more preferably from 55 to 110 mL/100 g, most preferably from 60 to 90 mL/100 g.

The recovered carbon black can have (a) a BET surface area determined according to ASTM D6556-17 in a range from 40 to 100 m$^2$/g, preferably from 50 to 80 m$^2$/g, more preferably 55 to 70 m$^2$/g, and a compressed oil absorption number (COAN) measured according to ASTM D3493-16 in a range from 30 to 200 mL/100 g, preferably from 40 to 150 mL/100 g, more preferably from 50 to 120 mL/100 g, even more preferably from 55 to 110 mL/100 g, most preferably from 60 to 90 mL/100 g, and/or (b) a BET surface area determined according to ASTM D6556-17 in a range from 10 to 100 m$^2$/g, preferably from 20 to 90 m$^2$/g, more preferably 25 to 80 m$^2$/g, and a compressed oil absorption number (COAN) measured according to ASTM D3493-16 in a range from 30 to 200 mL/100 g, preferably from 40 to 150 mL/100 g, more preferably from 50 to 120 mL/100 g, even more preferably from 55 to 110 mL/100 g, most preferably from 60 to 90 mL/100 g, and/or (c) a BET surface area determined according to ASTM D6556-17 in a range from 200 to 600 m$^2$/g, preferably from 250 to 500 m$^2$/g, more preferably 300 to 450 m$^2$/g, and a compressed oil absorption number (COAN) measured according to ASTM D3493-16 in a range from 30 to 200 mL/100 g, preferably from 40 to 150 mL/100 g, more preferably from 50 to 120 mL/100 g, even more preferably from 55 to 110 mL/100 g, most preferably from 60 to 90 mL/100 g.

The recovered carbon black can have a statistical thickness surface area (STSA) determined according to ASTM D6556-17 in a range from 15 to 500 $m^2/g$, preferably from 20 to 400 $m^2/g$, more preferably from 30 to 300 $m^2/g$, even more preferably from 40 to 200 $m^2/g$, most preferably from 50 to 150 $m^2/g$.

The recovered carbon black can have a volatile content measured at 950°C of 0.5 to 20 wt.-%, such as 1 to 10 wt.-%, 1.5 to 10 wt.-%, 1 to 5 wt.-%, 2 to 10 wt.-%, 2 to 15 wt.-%, 2.5 to 10 wt.-%, 3 to 7 wt.-%, or 3.5 to 7 wt.-%. The volatile content can be measured as described in the specification.

It is desired that the recovered carbon black (i) has a transmittance of at least 20 %, preferably at least 30 %, more preferably at least 40 %, even more preferably at least 60 %, most preferably at least 80 % wherein the transmittance at 425 nm in toluene is measured according to ASTM D 1618-18 against toluene, and/or (ii) has a transmittance of at least 20 %, preferably at least 30 %, more preferably at least 40 %, even more preferably at least 60 %, most preferably at least 80 % wherein the transmittance at 355 nm in toluene is measured according to ASTM D 1618-18 against toluene, wherein the transmittance is measured at 355 nm instead of 425 nm, and/or (iii) has a transmittance of at least 20 %, preferably at least 30 %, more preferably at least 40 %, even more preferably at least 60 %, most preferably at least 80 % wherein the transmittance at 300 nm in toluene is measured according to ASTM D 1618-18 against toluene, wherein the transmittance is measured at 300 nm instead of 425 nm.

Usually, the recovered carbon black comprises ash, wherein ash comprise metal, metal compounds, silicon, oxygen, sulphur and/or silica, preferably metal comprises zinc, silicon, calcium, cobalt, manganese, potassium, aluminium, and/or iron. The aforementioned ash components are typically residues of a particulate carbon black-containing feedstock after the pyrolysis. Waste tires often comprise the aforementioned components as additives or catalysts. However, the aforementioned components negatively affect the properties of the recovered carbon black as well as the properties of a rubber articles, such as a tire, comprising said recovered carbon black. Accordingly, it is intended to lower the ash content by selectively removing the ash components. Particularly, it is desired to remove zinc or zinc compounds and/or silicon, such as silica.

The recovered carbon black can have an ash content in a range of from 5 to 30 wt.-%, preferably from 8 to 25 wt.-%, more preferably from 11 to 22 wt.-%, most preferably from 15 to 20 wt.-%, wherein the wt.-% is based on the total weight of the recovered carbon black and wherein the ash content is determined according to ASTM D 1506-15 at 550 °C, 16 h.

Generally, ash (or ash components) is embedded in the carbon black of the recovered carbon black, attached to the carbon black of the recovered carbon black, attached on the surface of the carbon black of the recovered carbon black, and/or associated in the carbon black of the recovered carbon black. Generally, ash (or ash components) is embedded in the carbon of the recovered carbon black, attached to the carbon of the recovered carbon black, attached on the surface of the carbon of the recovered carbon black, and/or associated in the carbon of the recovered carbon black.

The recovered carbon black can comprise zinc, preferably zinc oxide. The recovered carbon black can have a zinc content in a range of from 2.0 to 6.0 wt.-%, preferably from 2.5 to 5.5 wt.-%, more preferably from 3.0 to 5.0 wt.-%, most preferably from 3.5 to 4.5 wt.-%, wherein the zinc content is based on the total weight of the recovered carbon black and wherein the zinc content is preferably determined according to Inductively Coupled Plasma Optical Emission Spectrometry (ICP-OES), more preferably the zinc content is determined as described in the specification.

The analysis of the Zn content can be conducted following method A in ASTM D8371-20 using an ICP-OES (Spectro Arcos III) from SPECTRO Analytical Instruments GmbH (Germany) and a microwave (turboWAVE inert) from MLS Mikrowellen-Labor-Systeme GmbH (Germany). For the sample preparation, 0.3-0.4 g of the material was weighed into a microwave tube with a capacity of 15 $cm^3$ and wetted with 1 ml of pure water (<0.055 $\mu$S/cm). Afterward, 10 $cm^3$ of concentrated nitric acid ($\geq$65 %) was added to the tube and treated in the microwave. The sample was then measured with ICP-OES.

The recovered carbon black can have a silicon (Si) content in a range of from 1.0 to 5.0 wt.-%, preferably from 1.8 to 4.5 wt.-%, more preferably from 2.0 to 4.0 wt.-%, most preferably from 2.2 to 4.5 wt.-%, wherein the wt.-% is based on the total weight of the recovered carbon black and wherein the silicon content is preferably determined by to Inductively Coupled Plasma Optical Emission Spectrometry (ICP-OES), more preferably the silicon content is determined as described in the specification.

The analysis of the Si content was conducted using an ICP-OES (iCAP 6300) from Thermo Fisher (USA) and a microwave (turboWAVE inert) from MLS Mikrowellen-Labor-Systeme GmbH (Germany). For the analysis of the Si content method A in ASTM D8371-20 was followed. However, a combination of concentrated nitric acid ($\geq$65 %) and concentrated hydrofluoric acid (~ 49%) (usually in a volume ratio of 1:1) with microwave treatment was used to completely digest the sample with microwave treatment. The digested sample is diluted with distilled water to a suitable concentration. The sample was measured with ICP-OES, whereby the device is equipped with a sample introduction kit suitable for HF. In ICP-OES, silicon can be measured with two wavelengths of 288.158 nm and 251.611 nm, preferably measured at 288.158 nm. A standard, such as a commercial standard solution (1,000 g/L Si in nitric acid (1 mol/L) with 2wt.-% HF commercially available from Bernd kraft GmbH (Germany) is measured for calibration. For the measurement of a rubber containing material, the ash obtained according to ASTM D 1506-15 at 550 °C, 16 h is used for the analysis of the Si content.

Silica (or silicon in form of silica) can be embedded in the carbon black of the recovered carbon black, attached to the carbon black of the recovered carbon black, attached on the surface of the carbon black of the recovered carbon black, and/or associated in the carbon black of the recovered carbon black. Silica (or silicon in form of silica) can be embedded in the carbon of the recovered carbon black, attached to the carbon of the recovered carbon black, attached on the surface of the carbon of the recovered carbon black, and/or associated in the carbon of the recovered carbon black.

The recovered carbon black can have an oxygen content in a range of from 1.0 to 3.0 wt.-%, preferably from 1.5 to 3.0 wt.-%, more preferably from 1.5 to 2.5 wt.-%, wherein the wt.-% is based on the total weight of the recovered carbon black and wherein the oxygen content is determined by elemental analysis as described in the specification.

The recovered carbon black can have a sulfur content in a range of from 1.0 to 4.0 wt.-%, preferably from 2.0 to 4.0 wt.-%, more preferably from 2.0 to 3.0 wt.-%, wherein the wt.-% is based on the total weight of the recovered carbon black and wherein the sulfur content is determined by elemental analysis as described in the specification.

The recovered carbon black can (i) comprise at least 50 wt.-% carbon black, preferably at least 60 wt.-% carbon black, more preferably at least 70 wt.-% carbon black, even more preferably at least 80 wt.-% carbon black, and most preferably at least 90 wt.-% carbon black, based on the total weight of the recovered carbon black, and/or can (ii) comprise 50 to 95 wt.-% carbon black, preferably 50 to 90 wt.-% carbon black, more preferably 65 to 87 wt.-% carbon black, more preferably 70 to 85 wt.-% carbon black, and most preferably 75 to 80 wt.-% carbon black, based on the total weight of the recovered carbon black.

The recovered carbon black can have a C (carbon) content of at least 50 wt.-%, preferably at least 50 to 80 wt.-%, more preferably 55 to 75 wt.-%, even more preferably 60 wt.-% to 72 wt.-%, and most preferably 62 to 70 wt.-%, wherein the wt.-% is based on the total weight of the recovered carbon black and wherein the carbon content is determined by elemental analysis as described in the specification.

The recovered carbon black can have a C (carbon) content of at least 50 wt.-%, preferably at least 50 to 80 wt.-%, more preferably 55 to 75 wt.-%, even more preferably 60 wt.-% to 72 wt.-%, and most preferably 62 to 70 wt.-%, wherein the wt.-% is based on the total weight of the recovered carbon black and wherein the carbon content is determined by elemental analysis as described in the specification.

The treated carbon black can have a coke content below 15 wt.-%, preferably below 10 wt.-%, more preferably below 5 wt.-%, and most preferably below 1 wt.-%, based on the total weight of the treated carbon black.

The treated carbon black of step (C) can comprise 65 to 100 wt.-% carbon, preferably 70 to 99 wt.-%, more preferably 80 to 95 wt.-%, even more preferably 82 to 90 wt.-%, and most preferably 85 to 88 wt.-%, based on the total weight of the carbon black of step (A), as measured as described in the specification.

The carbon content of the treated carbon black of step (C) can be higher than the carbon content of the recovered carbon black of step (A), and/or wherein the carbon content of the treated carbon black of step (C) can be more than 5 wt.-%, preferably more than 8 wt.-%, more preferably more than 10 wt.-%, even more preferably more than 15 wt.-%, and most preferably more than 20 wt.-%, higher compared to the carbon content of the carbon black of step (A), wherein the carbon content is determined by elemental analysis as described in the specification.

The treated carbon black can have a C (carbon) content of at least 60 wt.-%, preferably at least 63 wt.-%, more preferably 65 to 90 wt.-%, even more preferably 70 wt.-% to 88 wt.-%, and most preferably 75 to 87 wt.-%, wherein the wt.-% is based on the total weight of the treated carbon black and wherein the carbon content is determined by elemental analysis as described in the specification.

The treated carbon black can have a C (carbon) content of at least 3 wt.-% more than C (carbon) content of the recovered carbon black used in step (A), preferably at least 4 wt.-% more than C (carbon) content of the recovered carbon black used in step (A), more preferably at least 5 wt.-% more than C (carbon) content of the recovered carbon black used in step (A), even more preferably at least 6 wt.-% more than C (carbon) content of the recovered carbon black used in step (A) and most preferably at least 8 wt.-% more than C (carbon) content of the recovered carbon black used in step (A), wherein the carbon content is determined by elemental analysis as described in the specification.

The treated carbon black can have an ash content in a range of from 1 to 25 wt.-%, preferably from 2 to 20 wt.-%, more preferably from 5 to 18 wt.-%, most preferably from 10 to 15 wt.-%, wherein the wt.-% is based on the total weight of the treated carbon black and wherein the ash content is determined according to ASTM D 1506-15 at 550 °C, 16 h. It is desired that the ash content of the treated carbon black is lower than the ash content of the recovered carbon black.

The treated carbon black can have an ash content of at least 3 wt.-% less than ash content of the recovered carbon black used in step (A), preferably at least 4 wt.-% less than ash content of the recovered carbon black used in step (A), more preferably at least 5 wt.-% less than ash content of the recovered carbon black used in step (A), even more preferably at least 6 wt.-% less than ash content of the recovered carbon black used in step (A) and most preferably at least 8 wt.-% less than ash content of the recovered carbon black used in step (A), wherein the ash content is determined according to ASTM D 1506-15 at 550 °C, 16 h.

It is desired that the treated carbon black has a lower ash content compared to the ash content of the recovered carbon black used in step (A) and wherein the ash content is determined according to ASTM D 1506-15 at 550 °C, 16 h.

The treated carbon black can comprise ash, wherein ash comprise metal, metal compounds, silicon, oxygen, sulphur and/or silica, preferably metal comprises zinc, silicon, calcium, cobalt, manganese, potassium, aluminium, and/or iron.

The treated carbon black can have an iodine adsorption number of 30 to 80 mg/g, preferably 40 to 70 mg/g, more preferably 45 to 65 mg/g, the iodine adsorption number is measured according to ASTM D1510-17.

The treated carbon black can have a statistical thickness surface area (STSA) determined according to ASTM D6556-17 in a range from 15 to 500 $m^2$/g, preferably from 20 to 400 $m^2$/g, more preferably from 30 to 300 $m^2$/g, even more preferably from 40 to 200 $m^2$/g, most preferably from 50 to 150 $m^2$/g.

The treated carbon black can have a BET surface area determined according to ASTM D6556-17 in a range from 15 to 500 $m^2$/g, preferably from 30 to 300 $m^2$/g, more preferably from 40 to 250 $m^2$/g, even more preferably from 50 to 200 $m^2$/g, most preferably from 60 to 150 $m^2$/g.

The treated carbon black can have a compressed oil absorption number (COAN) measured according to ASTM D3493-16 in a range from 30 to 200 mL/100 g, preferably from 40 to 150 mL/100 g, more preferably from 50 to 120 mL/100 g, even more preferably from 55 to 110 mL/100 g, most preferably from 60 to 90 mL/100 g.

The obtained treated carbon black can have

(a) a BET surface area determined according to ASTM D6556-17 in a range from 40 to 100 $m^2$/g, preferably from 50 to 80 $m^2$/g, more preferably 55 to 70 $m^2$/g, and a compressed oil absorption number (COAN) measured according to ASTM D3493-16 in a range from 30 to 200 mL/100 g, preferably from 40 to 150 mL/100 g, more preferably from 50 to 120 mL/100 g, even more preferably from 55 to 110 mL/100 g, most preferably from 60 to 90 mL/100 g,
(b) a BET surface area determined according to ASTM D6556-17 in a range from 10 to 100 $m^2$/g, preferably from 20 to 90 $m^2$/g, more preferably 25 to 80 $m^2$/g, and a compressed oil absorption number (COAN) measured according to ASTM D3493-16 in a range from 30 to 200 mL/100 g, preferably from 40 to 150 mL/100 g, more preferably from 50 to 120 mL/100 g, even more preferably from 55 to 110 mL/100 g, most preferably from 60 to 90 mL/100 g, and/or
(c) a BET surface area determined according to ASTM D6556-17 in a range from 200 to 600 $m^2$/g, preferably from 250 to 500 $m^2$/g, more preferably 300 to 450 $m^2$/g, and a compressed oil absorption number (COAN) measured according to ASTM D3493-16 in a range from 30 to 200 mL/100 g, preferably from 40 to 150 mL/100 g, more preferably from 50 to 120 mL/100 g, even more preferably from 55 to 110 mL/100 g, most preferably from 60 to 90 mL/100 g.

The treated carbon black can have a volatile content measured at 950°C of 0.01 to 10 wt.-%, such as 0.3 to 10 wt.-%, 0.5 to 10 wt.-%, 0.7 to 5 wt.-%, 0.8 to 4 wt.-%, 0.9 to 3 wt.-%, 1 to 2.5 wt.-%, 1.1 to 2.3 wt.-%, 1.2 to 2.2 wt.-%, 1.3 to 2.1 wt.-%, 1.4 to 2 wt.-%, 1.5 to 1.9 wt.-%, or 1.6 to 1.8 wt.-%. The volatile content can be measured as described in the specification.

The treated carbon black (i) can have a transmittance of at least 80 %, preferably at least 85 %, more preferably at least 90 %, even more preferably at least 95 %, most preferably at least 98 % wherein the transmittance at 425 nm in toluene is measured according to ASTM D 1618-18 against toluene, and/or (ii) can have a transmittance of at least 80 %, preferably at least 85 %, more preferably at least 90 %, even more preferably at least 95 %, most preferably at least 98 % wherein the transmittance at 355 nm in toluene is measured according to ASTM D 1618-18 against toluene, wherein the transmittance is measured at 355 nm instead of 425 nm, and/or (iii) can have a transmittance of at least 80 %, preferably at least 85 %, more preferably at least 90 %, even more preferably at least 95 %, most preferably at least 98 % wherein the transmittance at 300 nm in toluene is measured according to ASTM D 1618-18 against toluene, wherein the transmittance is measured at 300 nm instead of 425 nm.

At least 70 wt.-%, preferably at least 80 wt.-%, more preferably at least 90 wt.-%, most preferably at least 98 wt.-%, of the treated carbon black can have a particle size of more than 2 mm, wherein the particle size is measured according to ASTM D 1511-12 (2017).

At least 50 wt.-%, preferably at least 60 wt.-%, more preferably at least 70 wt.-%, most preferably at least 80 wt.-%, of the treated carbon black can have a particle size of more than 1 to 2 mm, wherein the particle size is measured according to ASTM D 1511-12 (2017).

At least 50 wt.-%, preferably at least 60 wt.-%, more preferably at least 70 wt.-%, most preferably at least 80 wt.-%, of the treated carbon black, preferably before milling, can have a particle size of more than 2 to 2.8 mm, wherein the particle size is measured according to ASTM D 1511-12 (2017) using an additional U.S. Standard Sieves or equivalent, conforming to Specification ASTM E11, Sieve Nos. 7, having openings of 2800 $\mu$m. The sieves shall be 25 mm in height and 200 mm in diameter.

The (i) volume average particle size x50 of the treated carbon black can be from 50 to 800 $\mu$m preferably 80 to 500 $\mu$m, more preferably 100 to 400 $\mu$m, and most preferably 130 to 250 $\mu$m, wherein the volume average particle size is preferably measured as described in the specification by dry measurement using laser diffraction, and/or (ii) the volume average particle size x90 of the treated carbon black can be from 50 to 400 $\mu$m preferably 80 to 350 $\mu$m, more preferably 110 to 300 $\mu$m, and most preferably 140 to 240 $\mu$m, wherein the volume average particle size is preferably measured as described in the specification by dry measurement using laser diffraction, and/or (iii) the volume average particle size x95 of the treated carbon black can be from 80 to 300 $\mu$m preferably 100 to 350 $\mu$m, more preferably 120 to 300 $\mu$m, and most preferably 180 to 250 $\mu$m, wherein the volume average particle size is preferably measured as described in the specification by dry measurement using laser diffraction, and/or (iv) the volume average particle size x99 of the treated carbon black can be from 100 to 250 $\mu$m preferably 130 to 240 $\mu$m, more preferably 160 to 230 $\mu$m, and most preferably 180 to 220 $\mu$m, wherein the volume average particle size is preferably measured as described in the specification by dry measurement using laser diffraction.

The (i) volume average particle size x50 of the treated carbon black can be from 40 to 400 $\mu$m preferably 50 to 300 $\mu$m, more preferably 60 to 200 $\mu$m, and most preferably 80 to 200 $\mu$m, wherein the volume average particle size is preferably measured as described in the specification by dry measurement using laser diffraction, and/or (ii) the volume average particle size x90 of the treated carbon black can be from 40 to 300 $\mu$m preferably 80 to 250 $\mu$m, more preferably 120 to 200 $\mu$m, and most preferably 150 to 190 $\mu$m, wherein the volume average particle size is preferably measured as described in the specification by dry measurement using laser diffraction, and/or (iii) the volume average particle size x95 of the treated carbon black can be from 70 to 250 $\mu$m preferably 80 to 200 $\mu$m, more preferably 90 to 190 $\mu$m, and most preferably 90 to 180 $\mu$m, wherein the volume average particle size is preferably measured as described in the specification by dry measurement using laser diffraction, and/or (iv) the volume average particle size x99 of the treated carbon black can be from 70 to 250 $\mu$m preferably 80 to 200 $\mu$m, more preferably 90 to 190 $\mu$m, and most preferably 90 to 180 $\mu$m, wherein the volume average particle size is preferably measured as described in the specification by dry measurement using laser diffraction.

The (i) volume average particle size x50 of the treated carbon black can be from 10 to 200 $\mu$m preferably 20 to 120 $\mu$m, more preferably 30 to 100 $\mu$m, and most preferably 40 to 80 $\mu$m, wherein the volume average particle size is preferably measured as described in the specification by dry measurement using laser diffraction, and/or (ii) the volume average particle size x90 of the treated carbon black can be from 10 to 200 $\mu$m preferably 20 to 120 $\mu$m, more preferably 30 to 100 $\mu$m, and most preferably 40 to 80 $\mu$m, wherein the volume average particle size is preferably measured as described in the specification by dry measurement using laser diffraction, and/or (iii) the volume average particle size x95 of the treated carbon black can be from 10 to 200 $\mu$m preferably 20 to 120 $\mu$m, more preferably 30 to 100 $\mu$m, and most preferably 40 to 80 $\mu$m, wherein the volume average particle size is preferably measured as described in the specification by dry measurement using laser diffraction, and/or (iv) the volume average particle size x99 of the treated carbon black can be from 10 to 200 $\mu$m preferably 20 to 120 $\mu$m, more preferably 30 to 100 $\mu$m, and most preferably 50 to 70 $\mu$m, wherein the volume average particle size is preferably measured as described in the specification by dry measurement using laser diffraction.

The (i) volume average particle size x50 of the treated carbon black can be from 0.1 to 50 $\mu$m preferably 1 to 40 $\mu$m, more preferably 2 to 30 $\mu$m, and most preferably 3 to 20 $\mu$m, wherein the volume average particle size is preferably measured as described in the specification by dry measurement using laser diffraction, and/or (ii) the volume average particle size x90 of the treated carbon black can be from 0.1 to 50 $\mu$m preferably 1 to 40 $\mu$m, more preferably 2 to 30 $\mu$m, and most preferably 3 to 20 $\mu$m, wherein the volume average particle size is preferably measured as described in the specification by dry measurement using laser diffraction, and/or (iii) the volume average particle size x95 of the treated carbon black can be from 0.1 to 50 $\mu$m preferably 1 to 40 $\mu$m, more preferably 2 to 30 $\mu$m, and most preferably 3 to 20 $\mu$m, wherein the volume average particle size is preferably measured as described in the specification by dry measurement using laser diffraction, and/or (iv) the volume average particle size x99 of the treated carbon black can be from 0.1 to 50 $\mu$m preferably 1 to 40 $\mu$m, more preferably 2 to 30 $\mu$m, and most preferably 3 to 20 $\mu$m, wherein the volume average particle size is preferably measured as described in the specification by dry measurement using laser diffraction.

The treated carbon black can be milled, such as wet milled and/or dry milled, preferably dry milled.

The volume average particle size x50 of the treated carbon black can be from 0.3 to 50 $\mu$m preferably 0.5 to 50 $\mu$m, more preferably 0.8 to 20 $\mu$m, and most preferably 1 to 10 $\mu$m, wherein the volume average particle size is preferably measured as described in the specification by dry measurement using laser diffraction.

The volume average particle size x90 of the treated carbon black can be from 0.3 to 50 $\mu$m preferably 0.5 to 50 $\mu$m, more preferably 0.8 to 20 $\mu$m, and most preferably 1 to 10 $\mu$m, wherein the volume average particle size is preferably measured as described in the specification by dry measurement using laser diffraction.

The volume average particle size x95 of the treated carbon black can be from 0.3 to 50 $\mu$m preferably 0.5 to 50 $\mu$m, more preferably 0.8 to 20 $\mu$m, and most preferably 1 to 10 $\mu$m, wherein the volume average particle size is preferably measured as described in the specification by dry measurement using laser diffraction.

The volume average particle size x99 of the treated carbon black can be from 0.3 to 50 $\mu$m preferably 0.5 to 50 $\mu$m, more preferably 0.8 to 20 $\mu$m, and most preferably 1 to 10 $\mu$m, wherein the volume average particle size is preferably measured as described in the specification by dry measurement using laser diffraction.

The process can further comprise the pyrolysis of particulate carbon black-containing feedstock before the gasification, wherein pyrolysis of particulate carbon black-containing feedstock comprises the pyrolysis of particulate carbon black-containing feedstock at a temperature of 450 °C to 710 °C and in the absence of oxygen, wherein a pyrolysis gas stream and a pyrolysis carbon black-containing particulate is obtained. The particulate carbon black-containing feedstock can be a rubber granulate comprising carbon black.

Furthermore, a mixture of carbon black obtained according to the invention and virgin carbon black is provided, preferably 10 to 20 wt.-% of carbon black obtained according to the invention and 80 to 90 wt.-% of virgin carbon black, based on the total weight of the mixture, more preferably the wt.-% of the carbon black obtained according to the invention and virgin carbon black sum up to 100 wt.-%.

The invention will now be described with reference to the accompanying figures (FIGs) which do not limit the scope and ambit of the invention. The description provided is purely by way of example and illustration. However, specific features exemplified in the figures can be used to further restrict the scope of the invention and claims.

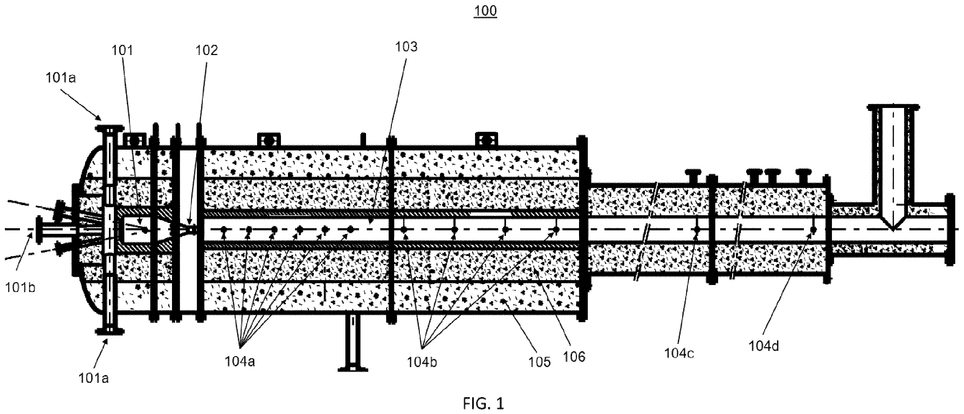

In FIG. 1 a furnace reactor (100) is shown that comprises a combustion chamber (101), a choke (102) and a tunnel (103). The reactor has an inner lining (106) as well as an outer lining (105). The combustion chamber (101) comprises means to inject a fuel (101b) and oxygen-containing gas (101a). In the figure, the oxygen-containing gas is injected into the combustion chamber (101) tangential or radial via oxygen containing gas means (101a) and the fuel is injected into the combustion chamber (101) axial via fuel injection means (101b). It is preferred that the oxygen-containing gas is preheated to a temperature described in the description. It is possible to adjust the temperature of the hot gas flow with the preheating of the oxygen-containing gas. Alternatively, the fuel can be preheated. In the combustion chamber (101) the fuel is combusted in the presence of the oxygen-containing gas. After the combustion, the temperature of the hot carrier gas is above 800 °C to bring the particulate carbon black-containing feedstock to the required temperature for the pyrolysis. The particulate carbon containing feedstock can be injected directly in the combustion chamber (101), in the choke (102) or in the tunnel (103). The particulate carbon containing feedstock can also be injected in any of the aforementioned combinations such as in the choke (102) as well as in the tunnel (103). The furnace reactor (100) comprises multiple positions for the quench (104a, 104b, 104c, 104d). The quench medium that is usually water reduces the temperature of the hot gas flow (or the product mixture) so that the reaction for forming the carbon black is terminated. Accordingly, the position of the quench has an influence of the residence time of the feedstock as well as the components derived from the feedstock. This means that residence time is increased if the quench position is adjusted further downstream the reactor. For instance, a quench at a position (104a) near the choke (102) results in a low residence time and a quench at a position (104c) downstream the reactor results in a high residence time. The reaction volume is the volume of the reactor between the injection of the feedstock and the position of the quench. If the feedstock is injected in the tunnel (103) and the distance between the position of the quench and the injection of the feedstock is 4200 mm, and the diameter of the tunnel is 200m, the resulting reaction volume is 132 L. The feeding rate of the particulate carbon containing feedstock should be adjusted depending on the reaction volume as mentioned in the description. For the present invention, a quench position at the back part of the tunnel is particularly preferred so that the particulate carbon containing feedstock has sufficient time for the evaporation or pyrolysis.

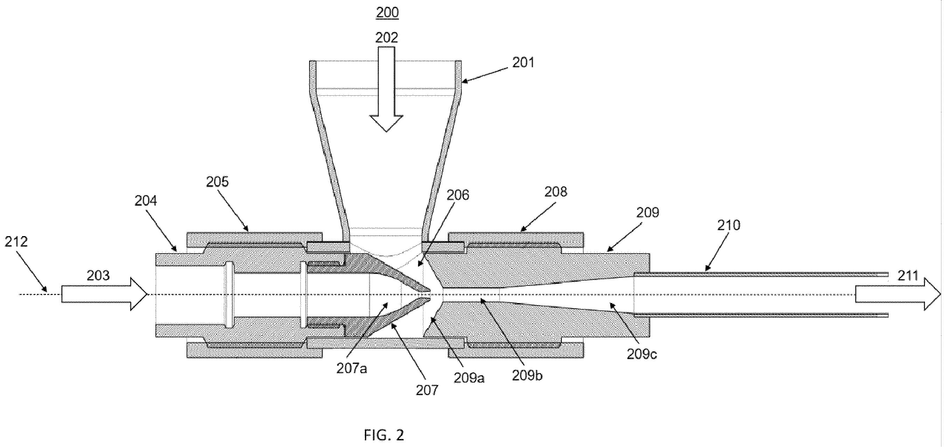

Referring to FIG. 2, a feeding and mixing device (200) is shown that comprises a carrier gas inlet (204), a particle inlet (201), means for accelerating and injecting a stream of carrier gas (207), a deagglomeration conduit (209), a mixing chamber (206) and an outlet for said carrier gas entraining particles (210). The carrier gas passage (212) is also indicated in FIG. 2. The carrier gas passage (212) extends along a longitudinal axis through said feeding and mixing device. The carrier gas (203) enters the feeding and mixing device (200) through the carrier gas inlet (204) and is accelerated in the means for accelerating and injecting a stream of carrier gas (207). In FIG. 2, the means for accelerating and injecting a stream of carrier gas (207) is configured as a Laval-nozzle. The Laval-nozzle comprises a convergent area (207a) in the flow direction. The resulting carrier gas jet is injected into the mixing chamber (206). The particles such as the particulate carbon black-containing feedstock (202) are perpendicularly injected into the mixing chamber (206). Accordingly, the particles will be entrained in the accelerated carrier gas. The abrupt acceleration of the particles results in a deagglomeration of the particles. The accelerated carrier gas comprising the particles are further injected into the deagglomeration conduit (209). In the deagglomeration conduit (209) the particles collide with each other or the inner wall or inner surface of the deagglomeration conduit (209) thereby a further deagglomeration is achieved. It is desired that the means for accelerating and injecting a stream of carrier gas (207) is configured in such a way that the carrier gas jet is directly injected into the deagglomeration conduit (209). Accordingly, a loss of the velocity can be minimized. The deagglomeration conduit (209) normally comprises from downstream to upstream (in the flow direction) an inlet funnel (209a), a conduit having a constant inner diameter (209b) and a diffuser nozzle diverging in said flow direction (209c). The inlet funnel (209a) further allows an optimal flow behavior into the conduit having a constant inner diameter (209b). The diffuser nozzle diverging in said flow direction (209c) is also beneficial for the flow behavior. The outlet (406) can be connected to the means for injecting the feedstock into a reactor according to FIG.1. It is preferred that one feeding and mixing device (200) supplies the deagglomerated feedstock to multiple means for injecting the feedstock into the reactor. It is further desired that the feeding and mixing device (200) comprises a screw conveyor that is connected with the particle inlet (201). The screw conveyor can provide a suitable amount or weight of particles into the mixing chamber (206). Furthermore, the feeding and mixing device (200) can be operated under pressure such as 1.5 bar or 2 bar. A pressure tank for the particles (e.g. particulate carbon containing feedstock) can be installed. Such a pressure tank is in fluid connection with the particle inlet (201) and is preferably connected with the feeding and mixing device (200) via a valve. Preferably two pressure tanks are present, wherein a first pressure tank connected to a second pressure tank. Both pressure tanks can be connected via a valve.

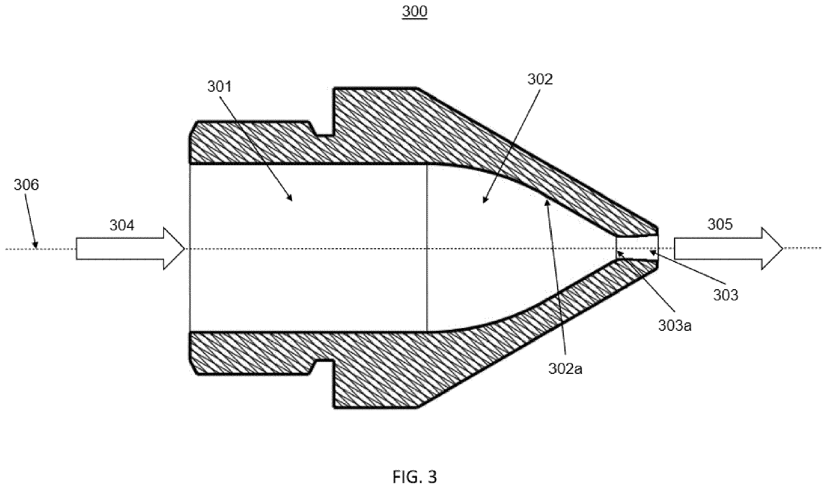

In FIG. 3, a Laval-nozzle (300) for use in feeding and mixing device (200) is shown. The carrier gas passage (306) extends along a longitudinal axis through said Laval-nozzle (300). The carrier gas (304) enters the Laval-nozzle (300) and is accelerated. The carrier gas jet (305) then leaves the Laval-nozzle (300). The Laval-nozzle (300) comprises a section that has a constant diameter (301), a section that converges (302a) in the flow direction (302), a throat (303a) and a divergent section (303). In the Laval-nozzle (300) the carrier gas is accelerated to a velocity of over 1 Ma.

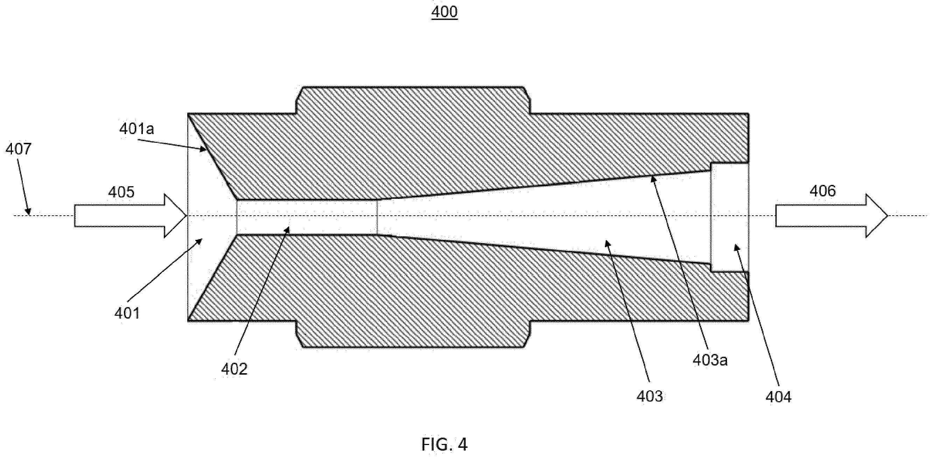

In FIG. 4, the deagglomeration conduit (400) for use in feeding and mixing device (200) is shown. The carrier gas passage (407) extends along a longitudinal axis through said deagglomeration conduit (400). The deagglomeration conduit (400) comprises an inlet funnel (401), a conduit having a constant inner diameter (402) and a diffuser nozzle (403) diverging in said flow direction (403a). Furthermore, an outlet (404) is shown that can be connected to means to inject the deagglomerated particles (e.g. deagglomerated particulate carbon containing particles) (406) into the reactor.

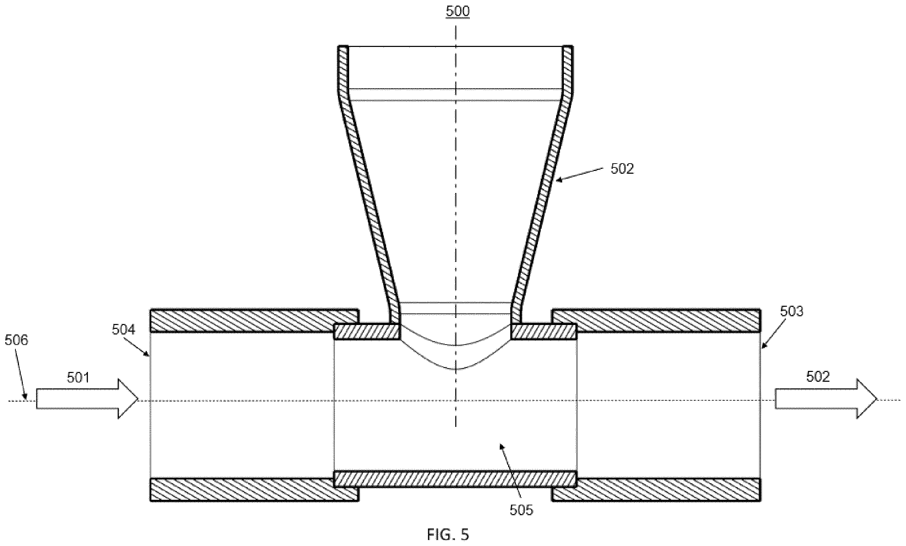

In FIG. 5, an alternative feeding and mixing device (500) is shown. The carrier gas passage (506) is also indicated in FIG. 5. The carrier gas passage (506) extends along a longitudinal axis through said feeding and mixing device. Said feeding and mixing device (500) comprises an inlet (504) for the carrier gas (501), a mixing chamber (505), an inlet for particles (502), and an outlet (503). A carrier gas (501) enters the feeding and mixing device (500). The carrier gas (501) should have a desirable velocity such as below 1 Ma or between 2 m/s to 1 Ma or between 20 m/s to 200 m/s. The particles such as the particulate carbon black-containing feedstock (202) are perpendicularly injected into the mixing chamber (507). Accordingly, the particles will be entrained in the accelerated carrier gas. The abrupt acceleration of the particles results in a deagglomeration of the particles. The outlet (503) can be connected to a reactor. Similar to the feeding and mixing device (200), a screw conveyor and at least one pressure tank can be installed.

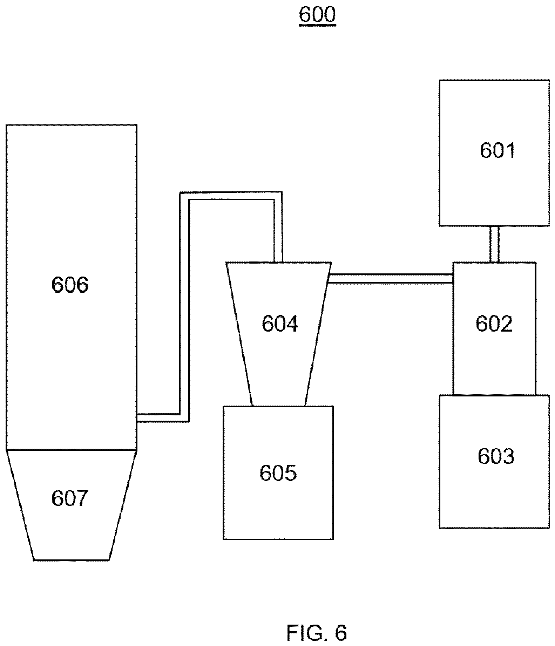

In FIG. 6, an air classifying system (600) is shown. The air classifying system (600) comprises a dosing unit (601) in which the material to be treated can be subjected to an air classifying unit (602) that comprises a classifying wheel (700). The dosing unit (601) can comprise a screw conveyer to adjust the material feeding rate. The air classifying unit (602) is subjected with compressed air. The coarse fraction (that is not able to pass the classifying wheel (700)) can be collected at the bottom of the air classifying unit (602) in a coarse fraction container (603). The classified material (that is able to pass the classifying wheel (700)) is subjected to a cyclone unit (604) to separate the treated carbon black. Due to their greater particle size, particles having a higher particle size are separated downwards into the treated carbon black container (605). Due to their low particle size, very fine particles follow the upward air flow and are collected in the filter (607) of the filter unit (606).

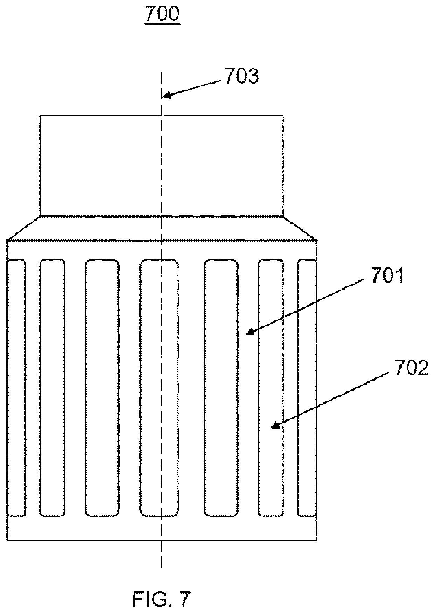

In FIG. 7, a classifying wheel (700) is shown. The classifying wheel (700) for an air classifier unit (602), whereby the classifying air flows contrary to the centrifugal direction, i.e. from the outside in, through vanes (701) arranged in a ring parallel to the rotational axis (703) that are arranged between a circular disc that bears the classifying wheel hub and an annular-shaped cover disc, whereby the flow channels (702) between the vanes (701) are formed by the planes of the vanes (701) that run parallel to each other in the direction of the rotational axis (703) and whereby these planes in the transition section to the circular disc and cover disc are connected with each other by means of an arch section.

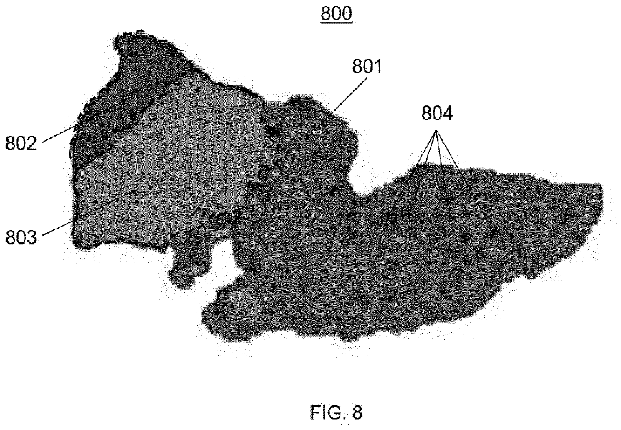

Figure 8 (FIG. 8) is an image of a particle (800) of the recovered carbon black 1. The figure shows ash components associated in the carbon of the rCB (such as embedded in the carbon of the rCB, attached to the carbon of the rCB, and/or attached on the surface of the carbon of the rCB). The particle mostly comprises of a carbon surface (801). The dashed zone (802) comprises silicates associated in the rCB particle. The dashed zone (803) comprises zinc associated in the rCB particle. The dark areas indicated with the number 804 are further silicate parts associated in the rCB particle.

**EXAMPLES**

Rubber granulate 1, i.e. Gummigranulat 0,0 - 0,5 mm (Article Nr. 005GUM), used in the following experiments was obtained from ESTATO Umweltservice GmbH (ESTATO), Germany. The rubber granulate was derived from waste tires and comprises synthetic rubber (SBR) and natural rubber (NR). The particle fractions are shown in table 1. Moreover, the weight average particle diameter (Dw50) was about 400 $\mu$m, measured according to ASTM D 1511-00 (2006). However, it is also possible to use different particulate carbon black-containing feedstocks such as plastic granulates or biomass-based granulates.

Table 1: Particle distribution of rubber granulate from ESTATO, measured according to ASTM D 1511-00 (2006).

| Particle fraction < 0.125 mm | 2.0 wt.-% |
|---|---|
| Particle fraction 0.125 - 0.25 mm | 9.6 wt.-% |
| Particle fraction 0.2 5 - 0.50 mm | 34.5 wt.-% |

(continued)

| Particle fraction 0.50 - 1.0 mm | 45.1 wt.-% |
|---|---|
| Particle fraction 1.0 - 2.0 mm | 8.8 wt.-% |
| Particle fraction < 2.0 mm | 0.0 wt.-% |

The characterization of the rubber granulate from ESTATO is shown in table 2.

Table 2: Characterization of the rubber granulate from ESTATO.

| Property | Measurement | Unit | Value |
|---|---|---|---|
| Carbon mass fraction | See method below | % | 87.623 |
| Hydrogen mass fraction | See method below | % | 7.767 |
| Nitrogen mass fraction | See method below | % | 0.396 |
| Sulfur mass fraction | See method below | % | 2.022 |
| Oxygen mass fraction | See method below | % | 2.191 |
| Water content | ASTM D 4928-12(2018) | % | 2.19 |
| Ash content | ASTM D 1506-15 at 550 °C, 16 h | % | 11.29 |
| Gross Calorific Value | ASTM D 4809:2018 | MJ/kg | 35.121 |

In addition, the rubber granulate comprises several metals in a mass fraction of about 300 ppm. For instance, zinc, and iron.

CHNS content determination by means of elemental analyzer The carbon mass fraction, hydrogen mass fraction, nitrogen mass fraction and sulfur mass fraction (i.e. carbon weight fraction, hydrogen weight fraction, nitrogen weight fraction and sulfur weight fraction) are measured using an elemental analyzer with thermal conductivity and infrared detector. The analyzer is a device for the fully automatic and quantitative analysis of the above elements. The combustion tube is brought to a temperature of 1100 °C and the reduction tube to 850 °C. First, a blank measurement is conducted. The carbon peak area should have a value < 50, the hydrogen peak area a value < 300, the nitrogen peak area a value < 50 and the sulphur peak area a value < 350. Otherwise, the individual adsorption columns are heated and then empty measurements are started again. The blank measurement is calculated as follows:

$$b = \frac{\sum b_i}{n},$$

wherein b is the blank measurement, $b_i$ is the peak area of the respective blank measurement, n is the number of blank measurements, i is an index of 1 to n.

The compensation of the blank measurement is calculated as follows,

$$acomp. = a - b,$$

wherein acomp. Is the compensated peak area, a is the measured peak area, and b is the blank measurement value.

Next, the daily factor is measured. For this purpose, 3 mg of sulphanilamide and 3 mg of low-level standard (e.g. carbon black standard) are weighed into each of 8 tin capsules. After weighing out the respective sample, it is placed in the capsule press, overlaid with helium for 35 s and then cold-sealed. Subtracting the blank value, the known theoretical element concentration of the standard samples is put in relation to the actually calculated element concentration. This results in the daily factor, which must be between 0.9 - 1.1. If this is not the case, these measurements should be repeated with newly opened standards. Otherwise, a new calibration must be carried out according to the manufacturer's instructions.

The daily factor is calculated as follows,

$$f = \frac{c_{theor.}}{c_{act.}},$$

Wherein f is the daily factor, $c_{theor.}$ is the theoretical factor, $c_{act.}$ is the actual calculated elemental concentration.

Then, 8 tin capsules each containing 5 mg $\pm$ 1 mg of the desired measured component, such as rubber granulate, are weighed. After weighing the respective samples, they are placed in the capsule press, covered with helium for 35 s and then cold welded.

For the measurement, the combustion tube is enriched with $O_2$. The elements C, H, N and S burn to form $CO_2$, $H_2O$, NOx, $SO_2$ and $SO_3$. Halogen bound in the sample reacts to form volatile halogen compounds. In addition, there are $WO_3$ granules in the combustion tube that provide further $O_2$ as a catalyst, prevent the formation of nonvolatile sulphates and bind interfering alkali and alkaline earth elements. The carrier gas stream is fed into the reduction tube with Cu filling. Nitrogen oxides (NOx) are completely reduced to $N_2$ at the copper contact. $SO_3$ is reduced to $SO_2$. Volatile halogen compounds are bound to the silver wool.

$N_2$ is not adsorbed and enters the thermal conductivity detector as the first measuring component, $CO_2$, $H_2O$ and $SO_2$ are adsorbed on the respective adsorption columns.

Then, one after the other, the adsorption columns are brought to desorption temperature, so that $CO_2$, then $H_2O$ as carrier gas enters the thermal conductivity detector and $SO_2$ enters the infrared detector. Depending on the type and concentration of the components, the detector delivers an electrical signal which is digitised and integrated. The measurement signal is recorded as a function of time and displayed as an integral value. The absolute element content of the sample is calculated from this integral value of the individual measurement peaks and the calibration factors.

The element concentration is calculated according to the following equation

$$c = \frac{a * 100 * f}{w},$$

wherein c is the elemental concentration (in %), a is the absolute element content (in mg), f is the daily factor, and w is the actual amount of the sample.

O content determination by means of elemental analyser

Depending on the oxygen concentration, an electrical signal is transmitted from the thermal conductivity detector (WLD) of the elemental analyser to a micro controller and then displayed as an integral value. From the integral value of the measurement peaks and the calibration factor, the absolute element content of the sample is concluded.

The pyrolysis tube is heated to a temperature of 1050°C. First, a blank measurement is conducted. The oxygen peak area should have a maximum value of 200. If the blank value is not below 200, CO adsorption column should be heated up (260 °C, CO desorption 150 °C). After the blank values have been successfully measured, the mean value of the blank value areas is calculated.

The blank measurement is calculated as follows:

$$b = \frac{\sum b_i}{n},$$

wherein b is the blank measurement, $b_i$ is the peak area of the respective blank measurement, n is the number of blank measurements, i is an index of 1 to n.

Next, the daily factor is measured. For this purpose, 3 mg of acetanilide are weighed into each of 8 tin capsules. After weighing out the respective sample, it is placed in the capsule press, overlaid with helium for 35 s and then cold-sealed. Subtracting the blank value, the known theoretical element concentration of the standard samples is put in relation to the actually calculated element concentration. This results in the daily factor, which must be between 0.9 - 1.1. If this is not the case, these measurements should be repeated with newly opened standards. Otherwise, a new calibration must be carried out according to the manufacturer's instructions.

The daily factor is calculated as follows,

$$f = \frac{c_{theor.}}{c_{act.}},$$

wherein f is the daily factor, $c_{theor.}$ is the theoretical factor, $c_{act.}$ is the actual calculated elemental concentration.

Then, 8 tin capsules each containing 5 mg $\pm$ 1 mg of the desired measured component, such as rubber granulate, are weighed. After weighing the respective samples, they are placed in the capsule press, covered with helium for 35 s and then cold welded. The samples are then measured.

The element concentration is calculated according to the following equation

$$c = \frac{a * 100 * f}{w} \ ,$$

wherein c is the elemental concentration (in %), a is the absolute element content (in mg), f is the daily factor, and w is the actual amount of the sample.

Manufacturing of recovered carbon black in a furnace reactor

Rubber granulate 1 comprising carbon black was injected to the furnace reactor in the choke via a feeding and mixing device having a nozzle. The rubber granulate 1 was derived from waste tires and comprises synthetic rubber (SBR) and natural rubber (NR). The process was performed on a small-scale furnace reactor as shown in FIG. 1. The furnace reactor comprises a combustion chamber, a choke and a tunnel. The choke reduces the diameter to 45 mm and has a length of 4200 mm. Downstream of the choke a reactor tunnel is mounted having a diameter of 200 mm. Rubber granulate was injected to the furnace reactor in the choke via a feeding and mixing device having a nozzle as shown in FIG. 2. The reaction volume of the reactor was about 130 liters. The reaction volume was the volume of the reactor between the position of the injection of the feedstock to the position of the quench. The furnace reactor comprises a combustion chamber, a choke and a tunnel. The choke reduces the diameter to 45 mm. Downstream of the choke a reactor tunnel is mounted having a diameter of 200 mm and has a length of 4200 mm. The feeding and mixing device deagglomerated the rubber granulate by accelerating the particulate carbon black-containing feedstock.

The reactions conditions for the manufacturing of the carbon black are shown in table 3.

Table 3: Reaction conditions in the furnace reactor.

| Combustion Air Flow (STP)[1] / m³/h | 150 | Nitrogen purge flow (STP) / m³/h | 14 |
|---|---|---|---|
| Natural Gas Flow (STP) / m³/h | 10.3 | Rubber granulate mass flow / kg/h | 25 |
| K value[2] | 0.66 | Temperature of the hot gas flow / °C | 1500 |
| Combustion air temperature upstream combustion chamber / °C | 354 | Residence time Is | 0.394 |
| Natural Gas temperature upstream combustion chamber / °C | 21 | | |

[1]273.15 K and 101325 Pa
[2]The k value is defined by the ratio of stoichiometric $O_2$ amount that is necessary for the complete stoichiometric combustion of the fuel to the supplied $O_2$ amount

After the injection of the rubber granulate feedstock, the reaction is quenched with water.

The temperature in the combustion chamber, i.e. the temperature of the hot combustion gases, was controlled by the temperature of the combustion air temperature upstream combustion chamber (i.e. temperature of the oxygen-containing gas). The k value was controlled by the natural gas flow (fuel) into the combustion chamber.

The obtained carbon black was used as carbon black feedstock 1 that is utilized in Examples 1 to 4 and the carbon black feedstock 1 had a volume average particle size x50 of 3.55 μm. A commercially available recovered carbon black 1 was used as carbon black feedstock 2 for Example 5. The volume average particle size x50 of the commercially available recovered carbon black 1 was 5.57 μm.

The classifying of the recovered carbon blacks was carried out using a multiprocessing system with a ATP unit of Hosokawa Alpine AG, Germany. The multiprocessing system with a ATP unit comprises an air classifying unit comprising a classifying wheel. A schematic multiprocessing system is shown in FIG. 6. The classifying conditions are shown in table 4.

Table 4: Classifying of recovered carbon black.

| | Example 1 | Example 2 | Example 3 | Example 4 | Example 5 |
|---|---|---|---|---|---|
| **Carbon black feedstock** | | | | | |
| Carbon black feedstock No. | 1 | 1 | 1 | 1 | 2 |

(continued)

| | Example 1 | Example 2 | Example 3 | Example 4 | Example 5 |
|---|---|---|---|---|---|
| **Carbon black feedstock** | | | | | |
| Ash content[3] / wt.-% | 19.58 | 19.83 | 22.86 | 19.11 | Not determined |
| Ash content using TGA[4] / wt.-% | Not determined | Not determined | Not determined | Not determined | 16.27 |
| **Properties of the classifying device** | | | | | |
| Treatment time / min | 26 | 60 | 60 | 75 | 70 |
| Total volume flow rate / m$^3$/h | 45 | 45 | 45 | 45 | 45 |
| Screw conveyer dosing unit / rpm | 40 | 40 | 40 | 45 | 40 |
| Rotational speed classifying wheel / rpm | 15000 | 15000 | 22000 | 7500 | 22000 |
| **Coarse fraction** | | | | | |
| Yield / wt.-% | 9 | 10 | 17 | 9 | Not determined |
| Ash content[3] / wt.-% | 74.91 | 73.78 | 67.93 | 70.75 | Not determined |
| **Filter fraction** | | | | | |
| Yield / wt.-% | 6 | 15 | 14 | 6 | 27 |
| Ash content[3] / wt.-% | 11.53 | 10.51 | 11.21 | 11.93 | Not determined |
| **Cyclone fraction (obtained carbon black)** | | | | | |
| | Treated carbon black 1 | Treated carbon black 2 | Treated carbon black 3 | Treated carbon black 4 | Treated carbon black 5 |
| Yield / wt.-% | 81 | 75 | 63 | 81 | 53 |
| Ash content[3] / wt.-% | 13.7 | 14.82 | 13.32 | 14.63 | Not determined |
| Ash content using TGA[4] / wt.-% | Not determined | Not determined | Not determined | Not determined | 13.02 |
| Reduction of the ash content[5] / wt.-% | 5.88 | 5.01 | 9.54 | 4.48 | 3.25 |
| [3]The ash content was determined according to ASTM D 1506-15 at 550 °C, 16 h. [4]Compositional Analysis by Thermogravimetry (TGA) according to ASTM D8474-23. [5]Reduction of the ash content: Comparison of the initial ash content and the ash content of the obtained carbon black. | | | | | |

The ash content of the obtained treated carbon black could be successfully reduced by classifying.

In-Rubber tests

The rubber compositions are mentioned in table 5. The ESBR Buna SB 1500 was introduced to a laboratory mixer GK1.5E with an intermeshing PES5-rotor geometry made by Harburg Freudenberger and milled for 30 seconds at a chamber temperature of 40°C, a fill factor of 0.66 and a rotor speed of 45 rpm. Subsequently, half of the carbon black volume, ZnO and stearic acid were added under milling. After 90 seconds the other half of the carbon black volume and the 6PPD were added. After further 90 secs the ram was lifted and cleaned, and the batch was mixed for another 90 seconds. The total mixing time in the internal mixer was 5 minutes and afterwards the batch was dropped on an open mill for cooling down and additional distributive mixing. The batch temperature did not exceed 160°C in the first mixing step. The batch was allowed to rest overnight.

During the second and final mixing step the sulfur and the accelerator (Vulkacit CZ/EG-Z) were then added in the indicated amounts to the master batch obtained from the first mixing step. The resulting mixture was milled in the GK1.5E mixer with a chamber temperature of 40°C and a fill factor of 0.64 for 2 minutes. The rotor speed was 30 rpm and it was secured that the batch temperature did not exceed 110 °C. Finally, the mixture was dropped from the internal mixer processed again on an open mill. The resulting vulcanizable compositions (green compounds) were cured between 9 and 13 minutes (Examples: 1R: 13 min, 2R: 9 min) at a temperature of 165 °C.

In Comparative Example 1R the commercially available recovered carbon black 1 was used which is the same recovered carbon black 1 as used to prepare the treated carbon black 5 in Example 5. In Example 2R, the treated carbon black 5 produced in Example 5 was used.

Table 5: The rubber compositions using different carbon blacks as noted in table 1.

|  | Unit | Composition |
|---|---|---|
| Rubbers | phr | 100 |
| Carbon black[7] | phr | 50 |
| ZnO[8] | phr | 3 |
| Stearic Acid[9] | phr | 2 |
| 6PPD[10] | phr | 1 |
| Sulfur[11] | phr | 1.5 |
| CBS[12] | phr | 1.5 |
| [6]Rubber ESBR, Buna SB 1500, Resinex Deutschland GmbH.<br>[7]Carbon black: Recovered carbon black 1, or treated carbon black 5 (see table 4).<br>[8]ZnO, ZNO RS RAL 844 C, Norkem B.V.<br>[9]Stearic Acid, Palmera B 1804, Caldic Deutschland GmbH.<br>[10]6PPD, VULKANOX 4020/LG, Brenntag GmbH.<br>[11]Sulfur, MAHLSCHWEFEL 80/90° unbeölt, Avokal GmbH.<br>[12]CBS, VULKACIT CZ/EG-C, Lanxess N.V. | | |

The properties of the specimens are indicated in table 6.

Table 6: Properties of the specimens including the respective carbon black.

| Ex. | Tensile Strength[13] / MPa | Elongatio n at Break[14] / % | Abrasion[15] / mm | Tear Resistance[16] (GRAVES) / N/mm |
|---|---|---|---|---|
| Comp. 1R | 24 | 601 | 105 | 198 |
| 2R | 25 | 616 | 90 | 21 |
| [13]Tensile Strength was measured ISO 37 - 2012, S2.<br>[14]Elongation at Break was measured ISO 37 - 2012, S2.<br>[15]Abrasion was measured at 23 °C DIN ISO 4649:2014-03, 10 N.<br>[16]Tear Resistance GRAVES was measured DIN ISO 34-1:2016-09, method B, variant (b). | | | | |

<u>Results</u>

The air classifying improves the tear resistance of the material, the tensile strength, as well as the abrasion.

It will be appreciated that various modifications can be made, and that many changes can be made in the preferred embodiments without departing from the principle of the invention.

**Claims**

1. A method for treating recovered carbon black, comprising:

(A) providing recovered carbon black,
(B) subjecting the recovered carbon black of step (A) to an air classifying unit (602),
(B) obtaining treated carbon black after the classifying of step (B).

2. The method according to claim 1, wherein the classifying unit (602) comprises a classifying wheel (700) and/or a cyclone unit (604).

3. The method according to any one of claims 1 or 2, wherein the recovered carbon black passes the flow channels (702) of a classifying wheel (700) and the recovered carbon black is thereby classified.

4. The method according to any one of the preceding claims, wherein treated carbon black is obtained by separating the classifying air flow comprising the classified recovered carbon black by using a cyclone unit (604), preferably the treated carbon black is obtained at the bottom outline of the cyclone unit (604)

5. The method according to any one of the preceding claims, wherein the classifying unit (602) comprises a classifying wheel (700) and the classifying wheel (700) is configured so that the classifying air flows contrary to the centrifugal force through vanes (701) arranged in a ring parallel to the rotational axis (703) that are arranged between a circular disc that bears the classifying wheel hub and an annular-shaped cover disc.

6. The method according to any one of the preceding claims, wherein the rotational speed of the classifying wheel (700) is selected so that the centrifugal acceleration is 1850 to 185000 m/s$^2$, preferably 5000 to 150000 m/s$^2$, more preferably 10000 to 130000 m/s$^2$, even more preferably 20000 to 100000 m/s$^2$, and most preferably 30000 to 100000 m/s$^2$, wherein the centrifugal acceleration using formula (I) and formula (II):

$$\omega = 2\pi * n \qquad\qquad\qquad (I),$$

$$\omega^2 r = a_c \qquad\qquad\qquad (II),$$

wherein n is the rotational speed of the classifying wheel (700) in rounds per second, r is the distance between the rotational axis and the vanes of the classifying wheel (700) (inner radius) in m, $a_c$ is the centrifugal acceleration in m/s$^2$, $\omega$ is the angular velocity in rad/s.

7. The method according to any one of the preceding claims, wherein the classifying unit (602) comprises a classifying wheel (700) and the classifying wheel (700) is subjected with a classifying air flow, preferably the classifying air flow is 10 to 100 m$^3$/h, preferably 20 to 80 m$^3$/h, more preferably 30 to 70 m$^3$/h, and most preferably 40 to 60 m$^3$/h

8. The method according to any one of the preceding claims, wherein the recovered carbon black is derived from the pyrolysis of rubber granulate, plastic granulate, and/or biomass-based granulate, preferably rubber granulate.

9. The method according to any one of the preceding claims, wherein

(i) the volume average particle size x50 of the recovered carbon black is from 0.1 to 50 $\mu$m preferably 1 to 40 $\mu$m, more preferably 2 to 30 $\mu$m, and most preferably 3 to 20 $\mu$m, wherein the volume average particle size is preferably measured as described in the specification by dry measurement using laser diffraction, and/or
(ii) the volume average particle size x90 of the recovered carbon black is from 0.1 to 50 $\mu$m preferably 1 to 40 $\mu$m, more preferably 2 to 30 $\mu$m, and most preferably 3 to 20 $\mu$m, wherein the volume average particle size is preferably measured as described in the specification by dry measurement using laser diffraction, and/or
(iii) the volume average particle size x95 of the recovered carbon black is from 0.1 to 50 $\mu$m preferably 1 to 40 $\mu$m, more preferably 2 to 30 $\mu$m, and most preferably 3 to 20 $\mu$m, wherein the volume average particle size is preferably measured as described in the specification by dry measurement using laser diffraction, and/or
(iv) the volume average particle size x99 of the recovered carbon black is from 0.1 to 50 $\mu$m preferably 1 to 40 $\mu$m, more preferably 2 to 30 $\mu$m, and most preferably 3 to 20 $\mu$m, wherein the volume average particle size is preferably measured as described in the specification by dry measurement using laser diffraction.

10. The method according to any one of the preceding claims, wherein the recovered carbon black comprises ash, wherein ash comprise metal, metal compounds, silicon, oxygen, sulphur and/or silica, preferably metal comprises zinc, silicon, calcium, cobalt, manganese, potassium, aluminum, and/or iron.

11. The method according to any one of the preceding claims, wherein the recovered carbon black has an ash content in a range of from 5 to 30 wt.-%, preferably from 8 to 25 wt.-%, more preferably from 11 to 22 wt.-%, most preferably from 15 to 20 wt.-%, wherein the wt.-% is based on the total weight of the recovered carbon black and wherein the ash content is determined according to ASTM D 1506-15 at 550 °C, 16 h.

12. The method according to any one of the preceding claims, wherein the recovered carbon black has a C (carbon) content of at least 50 wt.-%, preferably at least 50 to 80 wt.-%, more preferably 55 to 75 wt.-%, even more preferably 60 wt.-% to 72 wt.-%, and most preferably 62 to 70 wt.-%, wherein the wt.-% is based on the total weight of the recovered carbon black and wherein the carbon content is determined by elemental analysis as described in the specification.

13. The method according to any one of the preceding claims, wherein ash is embedded in the carbon of the recovered carbon black, attached to the carbon of the recovered carbon black, attached on the surface of the carbon of the recovered carbon black, and/or associated in the carbon of the recovered carbon black.

14. Treated carbon black obtained according to any one of the preceding claims.

15. Use of an air classifying unit (602) for reducing the ash content of recovered carbon black to obtain treated carbon black.

FIG. 1

FIG. 2

FIG. 3

FIG. 4

FIG. 5

600

FIG. 6

<u>700</u>

FIG. 7

FIG. 8

Europäisches
Patentamt

European
Patent Office

Office européen
des brevets

# EUROPEAN SEARCH REPORT

**Application Number**

EP 24 15 0493

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/371385 A1 (VERBERNE ARNOLDUS HENRICUS ADRIANUS [NL] ET AL) 18 December 2014 (2014-12-18) * paragraphs [0015] - [0181] * * tables 1-12 * * examples 1-9 * ----- | 1-15 | INV. C09C1/48 C09C1/50 C09C1/56 |
| X | EP 2 465 904 A1 (ECO LOGIC SP Z O O [PL]) 20 June 2012 (2012-06-20) * paragraphs [0001] - [0025] * ----- | 1-15 | |
| X | US 2022/380605 A1 (WIBBELER WILLIAM ANTHONY [US] ET AL) 1 December 2022 (2022-12-01) * paragraphs [0021] - [0084] * ----- | 1-15 | |
| X | US 2020/291237 A1 (HARDMAN NED J [US] ET AL) 17 September 2020 (2020-09-17) * paragraphs [0029] - [0085], [0119] - [0136] * ----- | 1-15 | **TECHNICAL FIELDS SEARCHED (IPC)** C09C |

The present search report has been drawn up for all claims

| Place of search | Date of completion of the search | Examiner |
|---|---|---|
| The Hague | 17 June 2024 | Marino, Emanuela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 0493

This annex lists the patent family members relating to the patent documents cited in the above-mentioned European search report.
The members are as contained in the European Patent Office EDP file on
The European Patent Office is in no way liable for these particulars which are merely given for the purpose of information.

17-06-2024

| Patent document cited in search report | | Publication date | Patent family member(s) | | Publication date |
|---|---|---|---|---|---|
| US 2014371385 | A1 | 18-12-2014 | BR | 112014014978 A2 | 13-06-2017 |
| | | | CN | 104125988 A | 29-10-2014 |
| | | | EP | 2794766 A1 | 29-10-2014 |
| | | | ES | 2675128 T3 | 06-07-2018 |
| | | | PL | 2794766 T3 | 28-09-2018 |
| | | | US | 2014371385 A1 | 18-12-2014 |
| | | | US | 2017114222 A1 | 27-04-2017 |
| | | | WO | 2013095145 A1 | 27-06-2013 |
| EP 2465904 | A1 | 20-06-2012 | NONE | | |
| US 2022380605 | A1 | 01-12-2022 | AU | 2019359896 A1 | 29-04-2021 |
| | | | CA | 3116891 A1 | 23-04-2020 |
| | | | CL | 2021000927 A1 | 03-12-2021 |
| | | | CN | 113272371 A | 17-08-2021 |
| | | | CO | 2021006349 A2 | 31-05-2021 |
| | | | EP | 3867306 A1 | 25-08-2021 |
| | | | US | 2020123390 A1 | 23-04-2020 |
| | | | US | 2022380605 A1 | 01-12-2022 |
| | | | US | 2024018361 A1 | 18-01-2024 |
| | | | WO | 2020082050 A1 | 23-04-2020 |
| US 2020291237 | A1 | 17-09-2020 | CA | 3060576 A1 | 25-10-2018 |
| | | | CN | 110799602 A | 14-02-2020 |
| | | | CN | 115637064 A | 24-01-2023 |
| | | | CN | 115746586 A | 07-03-2023 |
| | | | EP | 3612600 A1 | 26-02-2020 |
| | | | JP | 2020517562 A | 18-06-2020 |
| | | | KR | 20190138862 A | 16-12-2019 |
| | | | US | 2020291237 A1 | 17-09-2020 |
| | | | US | 2024093035 A1 | 21-03-2024 |
| | | | WO | 2018195460 A1 | 25-10-2018 |

EPO FORM P0459

For more details about this annex : see Official Journal of the European Patent Office, No. 12/82

**EP 4 582 493 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J.-B. DONNET et al.** *Carbon Black:Science and Technology*